Europäisches Patentamt

(19) European Patent Office

Office européen des brevets

(11) Publication number: **0 239 946 B1**

# (12) EUROPEAN PATENT SPECIFICATION

(45) Date of publication of patent specification:
02.01.91 Bulletin 91/01

(51) Int. Cl.⁵ : **G01C 19/64**

(21) Application number: **87104564.7**

(22) Date of filing: **27.03.87**

(54) **Readout apparatus for a ring laser angular rate sensor.**

(30) Priority: 02.04.86 US 847379

(43) Date of publication of application:
07.10.87 Bulletin 87/41

(45) Publication of the grant of the patent:
02.01.91 Bulletin 91/01

(84) Designated Contracting States:
DE FR GB

(56) References cited:
US-A- 3 373 650
US-A- 3 390 606
US-A- 3 627 425
US-A- 4 219 276

(73) Proprietor: HONEYWELL INC.
Honeywell Plaza
Minneapolis MN 55408 (US)

(72) Inventor: Bergstrom, James W.
1943 9th Street NW
New Brighton, MN 55112 (US)
Inventor: Weber, Mark W.
20201 Meadowvale Road
Elk River, MN 55330 (US)

(74) Representative: Herzbach, Dieter et al
Honeywell Europe S.A. Holding KG Patent-
und Lizenzabteilung Kaiserleistrasse 55
Postfach 184
D-6050 Offenbach am Main (DE)

Jouve, 18, rue Saint-Denis, 75001 PARIS

## Description

The present invention relates to a readout apparatus according to the preamble of claim 1.

Ring laser angular rate sensors are well known and are particularly described in US-A 3,373,650 and US-A 3,390,606. Ring laser angular rate sensors of the type referred to commonly utilize a block of material that is dimensionally stable, both thermally and mechanically. The block usually includes a plurality of interconnected gas containing tunnels or passages which form a closed-loop path in the shape of a triangle, a rectangle, or any polygonal path. At each intersection of a pair of interconnected tunnels is a mirror mounted on the block. This arrangement of mirrors and interconnected tunnels forms an optical closed-loop path. Further, at least one anode and one cathode are each mounted on the block and in communication with the gas. Each of the components, including the mirrors, anode, and cathode, must be sealed to the block to form a gas tight seal. The block is usually filled with a lasing gas such as a mixture of helium and neon. A sufficiently large electrical potential is applied between the anode and cathode to cause a discharge current therebetween which results in the production of a pair of counter-propagating laser beams within the block.

Associated with ring laser angular rate sensors is a source of error usually referred to as "lock-in." The source of error is thought to be predominantly caused by back scattering of light at each of the mirrors which form in part the optical closed-loop path which the counter-propagating laser beams traverse. As is well understood by those skilled in the art, there are two widely used techniques to minimize the lock-in error. The first technique consists of dithering the block as taught in US-A 3,373,650. Mechanically dithering the laser block reduces the source of error caused by lock-in to acceptable levels such that ring laser angular rate sensors have become commercially successful.

The second technique consists of producing mirror assemblies structured so as to provide highly polished substrates having superior reflective coatings which achieve minimal laser beam scattering at the surfaces thereof. Development of the mirror assemblies over the years has made it possible for high performance ring laser angular rate sensors.

In order to obtain useful information from the ring laser angular rate sensors as described above, a small percentage of the counter-propagating laser beams is allowed to pass through one of the mirrors. The light beams are commonly passed through a prism which combines the beams at slightly different angles and thereby creates an interference fringe pattern across a surface of a readout apparatus containing two photodetectors such as photosensitive diodes. The two photodetectors may be discrete or may be part of an integrated circuit chip. The readout is intended to provide a pair of output signals in phase quadrature. One common example of a readout requires the photodetectors to be separated by one quarter of a fringe spacing so as to provide readout output signals in phase quadrature. Other readouts include, among others, a pair of photodetectors and appropriate masks.

When a ring laser is rotated about its input axis, the counter-propagating beam frequencies change slightly, one increasing and the other decreasing in proportion to the rotation rate of the sensor. The difference in beam frequencies results in a beat frequency which is indicated by the rate of movement of the fringe pattern across the photodetectors. At least one of the photodetector outputs is fed into a logic circuit for subsequent counting of the number of fringes passing across the photodetector. The number of fringes passing a detector is directly related to the actual angular rotation of the sensor. The two detector output signals are compared to ascertain sensor rotation direction.

It is the object of the present invention to provide a high resolution readout for a ring laser angular rate sensor. This object is achieved according to the characterizing features of claim 1. Further advantageous embodiments of the readout circuit may be taken from the dependent claims.

In the present invention, the sensor readout includes optics for producing an interference fringe pattern to impinge upon a pair of photodetectors. The detectors are positioned to provide a first pair of output signals in phase quadrature and representative of the interference fringe pattern impinging thereon. A second pair of analog signals representing the difference and sum of the pairs of analog signals is generated and presented to a signal processing circuit in combination with the first pair of phase quadrature signals. These four signals are, in turn, processed to provide signal indications of 1/8 of an interference fringe passing either one of the photodetectors.

With respect to the figures of the attached drawings embodiments of the invention shall be further described, where

Figure 1 is an illustration of a ring laser readout system for generating an interference fringe pattern.

Figure 2 illustrates the intensity of the interference fringe pattern impinging on a pair of photodetectors in the readout system.

Figure 3 represents the analog output signal of the photodetectors.

Figure 4 is a block diagram of a readout circuit for operating on signals A and B of Figure 3, representative of the phase quadrature photodetector output signals, to provide readout information having quarter count phase resolution information.

Figure 5 is a schematic block diagram for obtaining an additional pair of phase quadrature output signals in accordance with the present invention. Figure 6 represents the analog output signals of the two photodetector output signals and the pair of signals generated by the circuit of Figure 5.

Figure 7 shows a schematic block diagram of additional circuitry in combination with that of Figure 4 to provide readout information having 1/8th of a count phase resolution.

Figure 8 is a schematic block diagram showing how the signals of the two photodetectors and those generated by circuitry of Figure 5 may be combined in such a manner to provide a third pair of phase quadrature signals which may be utilized to provide resolution of 1/16th of a count.

Figure 9 represents the analog output signals of Figure 6 and those additional analog signals generated by the circuitry of Figure 8.

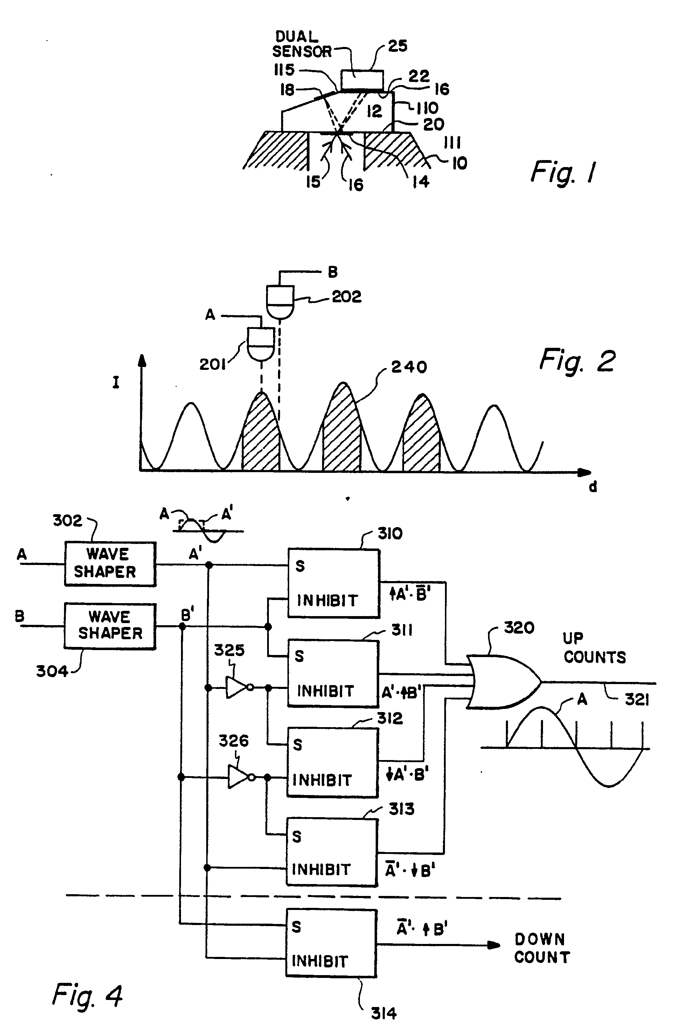

Figure 1 illustrates an optical system for producing an interference fringe pattern resulting from the combining of a portion of each of the laser beams of the ring laser angular rate sensor. Figure 1 shows only one of the reflection surfaces which defines, in part, the optical closed-loop path of a ring laser angular rate sensor. Sensor block 10 is of the type shown and described in US-A 3,390,606.

Fixed to block 10 is mirror/readout prism 12 including substrate 110 for transmitting light. Substrate 110 includes a first major surface 111 suitably polished and optically coated to provide a partially transmissive mirror 14 for reflecting a major portion of beam 16 impinging thereon in a direction opposite of beam 15. Similarly, mirror 14 reflects a major portion of beam 15 in the opposite direction of beam 16 in a well known manner so as to provide counter-propagating laser beams within block 10. The angle between beams 15 and 16 depends upon the optical closed-loop path chosen, i.e., triangular (60°), rectangular (90°), and the like.

Substrate 110 further includes a second surface 115 suitably polished and optically coated for providing a mirror surface 18. Mirror 18 is positionally located so as to reflect that portion of beam 16 transmitted through mirror 14. Substrate 110 is constructed such that the surface 115 is at a selected angle relative to surface 111 which in turn determines the angle between the incident and reflected beams at the surface of mirror 18.

In turn, the reflected beam from mirror 18 is reflected from mirror 14 so as to travel at a slight angle relative to that portion of beam 15 transmitted through mirror 14. The transmitted portion of beam 15 through mirror 14 and doubly reflected portion of beam 16 arrive at transmissive surface 116 so as to form an interference fringe pattern at the surface thereof.

Also shown in Figure 1 is a dual photodetector sensor 25 coupled to surface 116 for being responsive to the interference fringe pattern passing therethrough. Although sensor 25 is shown rigidly secure to surface 116, sensor 25 may be spatially removed from surface 116 but still be responsive to the interference fringe pattern transmitted through surface 116.

In Figure 2, there shown are a pair of photodetectors 201 and 202 having output signals A and B, responsive to an interference fringe pattern 240 shown as an intensity curve versus distance across the surface 116. Photodetectors 201 and 202 are shown to be separated by 1/4 of a fringe spacing such that movement of the interference pattern will produce signals A and B which are in phase quadrature.

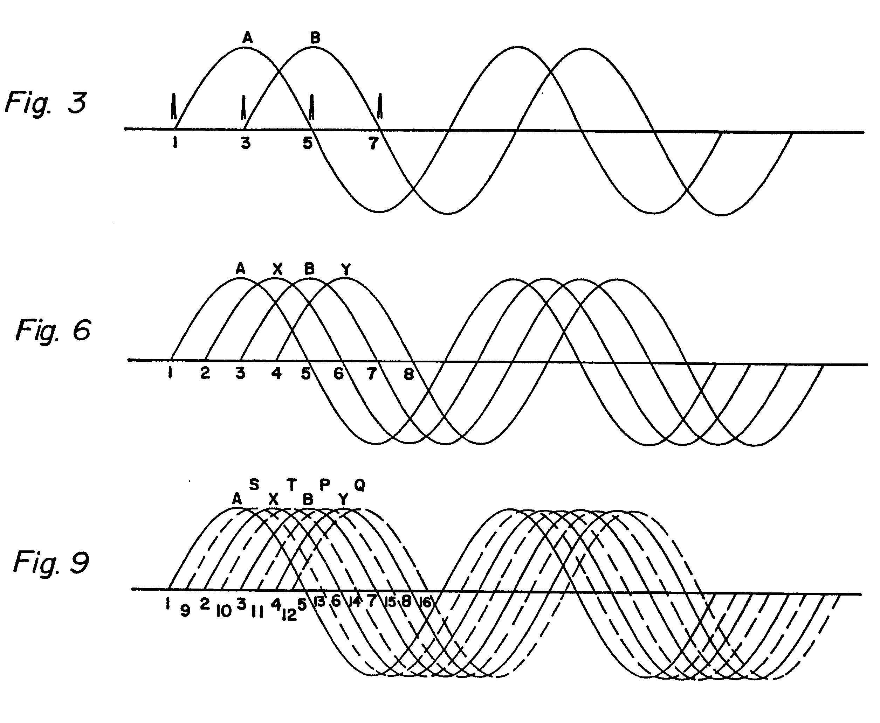

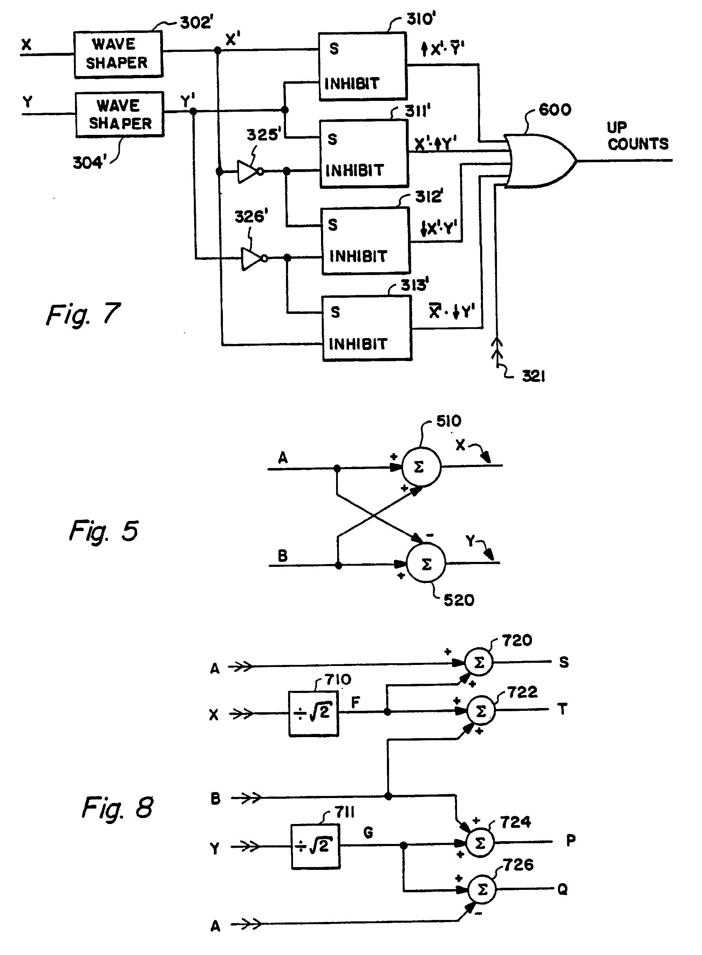

The photodetectors 201 and 202 provide analog signals which may be utilized to count full fringes passing a photodetector and are also utilized to determined direction of movement of the fringes. Figure 3 graphically illustrates the phase quadrature relationship between analog signals A and B. Figures 3 and 4 illustrate how signals A and B may be utilized to obtain a resolution of 1/4 of a fringe or simply 1/4 of a count which may be counted so as to obtain angular information in a well known manner. That is, passing of one complete fringe corresponds to a known angular rotation based on a geometry of the sensor.

Referring now to Figure 4, signals A and B are respectively passed through wave shaping circuits 302 and 304, respectively, so as to produce logical signal A' and B'. Herein the prime (') indicates logical signals whereas the absence of the prime indicates analog signals. The correlation between signal A and signal A' is indicated in Figure 4 just above the signal line A'.

Shown in Figure 4 are five one-shot circuits 310, 311, 312, 313 and 314. The outputs of one-shots 310-313 are each presented as inputs to an OR circuit 320 which provides an output signal indicative of up-counts which correspond to a particular direction of the sensor as will subsequently be described. Each of the one-shots has a trigger input, identified as the "S" input, an input which upon a rising signal will cause an output pulse to appear at its output if the inhibit signal line is at a low level. The circuits as illustrated in the Figures, as will be described, may be provided by a variety of digital circuit techniques including those which are both synchronous and asynchronous.

Again referring to Figure 4, output signal A' is presented as the s-input to one-shot 310 and the inhibit input of one-shot 313. Signal A' is inverted by inverter 325 and presented to the inhibit input of one-shot 311 and the s-input of one-shot 312. Signal B' is presented as the inhibit input of one-shot 310 and the s-input of one-shot 311. Signal B' is inverted by inverter 326 and subsequently presented to the inhibit input of one-shot 312 and the s-input of one-shot 313.

The operation of the circuit shown in Figure 4 is particularly illustrated by the graphical diagrams of Figure 3. Up-count signals at the output of OR gate 320 will occur at zero crossing points of signals A and B occurring at points 1, 3, 5, and 7. Thus, for each passing of a full fringe, four pulses occur at the output of OR gate 320. Although the representation shown in Figure 3 shows a symmetrical sine wave for signals A and B, it should be recognized by the those skilled in the art that the passing of a full cycle of signal A corresponds to a 360° phase change between the counter-propagating laser beams. The phase change will, of course, depend upon the speed at which the sensor is rotating. Nonetheless, regardless of the rate of rotation, the output pulses will occur at signal points 1, 3, 5, and 7 to indicate the rotation of the sensor.

Also illustrated in Figure 4 is one-shot 314 having its s-input connected to the output signal B' and the inhibit input connected to signal A'. When rotation is reversed in the direction, the output of one-shot 314 provides output signals referred to as down-counts indicating an opposite direction. Further circuits may, of course, be added to provide the full 1/4 count resolution as accomplished by one-shots 310-313, but have been left out for simplicity.

In accordance with the present invention, the circuit illustrated in Figure 5 can be utilized to provide improved resolution by operating upon normalized analog signals A and B to provide two new analog signals X and Y as will now be described. Signal A and signal B are presented to an analog summing circuit 510 having an output signal indicated as signal X. Further, analog summing circuit 520 provides the difference signal between signal B less signal A for providing output signal Y. The circuit of Figure 5 shows how two normalized or equal amplitude phase quadrature signals A and B can be factorial combined to produce an additional pair of phase quadrature signals displaced in phase relative to the original pair.

Figure 6 illustrates the resultant phase relationship of analog signals A, B, X, and Y. It should be noted that signals X and Y have been normalized for illustration purposes. However, in accordance with the circuit of Figure 5, signals X and Y would have amplitudes different than those shown. Analog signals A, B, X and Y are successively separated in phase by 45° and correspond to a passing of a 45° phase between the counter-propagating laser beams. Signals X and Y resulting from the operation of the circuit of Figure 5 are an analog pair of signals also in phase quadrature but displaced in phase by π/4 relative to signals A and B, respectively.

Figure 7 illustrates how to process signals X and Y to provide further count information which may be combined with the up-counts from OR circuit 320 in Figure 4. The combination of the circuits of Figures 4 and 7 will provide 1/8 count information (π/4) rotation information as will be described. The components designated in Figure 7 are substantially the same as Figure 3 except for the omission of down-count circuit 314. The circuit elements shown in Figure 7 are similar to those shown in Figure 4 with similarly functioning circuit components in Figure 7 having the same numeral designations as in Figure 4 except for the prime (') indicator. The circuit connections are identical to those in Figure 4 except that the input to wave shaper 302' is signal X and the input to wave shaper 304' is signal Y. OR gate 600 serves the same intended function as OR gate 320 except it also includes inputs from the output of OR gate 320 identified as signal 321.

The operation of the circuit of Figure 7 will now be described with reference to the signal relationships of Figure 6. Output counts will be provided by the output of OR gate 600 at zero crossings indicated by signal points 1-8 where signal points 1, 3, 5, and 7 were those already described and obtained with the circuit of Figure 4, and the signal relationships shown in Figure 3. Each of the output counts produced at the output of OR circuit 600 will be separated by 45° indicating a π/4 phase change between the counter-propagating laser beams. Thus, for each fringe passing a photodetector in one direction, the circuit of Figure 7 in combination with the circuit of Figure 4 will provide 8 counts, each representing a π/4 phase change between the counter-propagating laser beams.

Further resolution improvement by another factor of 2 may be accomplished in the present invention by use of the circuit of Figure 8. In Figure 8, signals X and Y are each passed through an attenuating circuit, respectively, identified by circuits 710 and 711 to produce signals F and G. Signals F and G are appropriately weighted signals X and Y. Signals F and G may then be combined with signals A and B to produce signals S, T, P, and Q. Four analog summing circuits 720, 722, 724, and 726 provide output signals S, T, P, and Q, respectively. Circuit 720 provides an analog sum of signals A and F, circuit 722 provides the sum of signal F and B, circuit 724 provides the sum of signal B and G, and circuit 726 provides the difference signal G - A. The phase relationships between analog signals A and B, X and Y, and S, T, P, and Q are illustrated in Figure 9. Each of the analog signals are phase separated by 22.5° or π /8. It should be noted that signals S and P are in phase quadrature, and are similar to signals A and B, and signals T and Q are in phase quadrature and similar to signals X and Y, since signal S leads signal T by 45° and signal P leads signal Q by 45°, and that signals S and P, and T and Q are in phase quadrature with each other, respectively. Accordingly, additional circuitry, not shown, duplicating Figures 4 and 8, may be used to generate eight additional counts for each change of one fringe, where each of the additional counts are shifted in phase by π/8. If such additional circuitry was utilized, signals S and P would be substituted in Figure 4 for signals A and B, and signals T and Q may be substituted in Figure 7 for signals X and Y, such that the combination of all of the output pulses would provide 16 counts corresponding to the zero crossings indicated in Figure 9 for each interference fringe passing the photodetectors.

It should be recognized by those skilled in the art that Figure 6 shows two pairs of phase quadrature signals and Figure 9 shows four pairs of phase quadrature signals. Figures 3 and 9 show multiples of "2" of the original pair of phase quadrature signals. It is within the scope of the invention to have other multiples, for example "3". Consider the situation where there are three pairs of phase quadrature signals. The first pair of signals are signals A and B, the second pair of signals are M and N, and the third pair of signals are P and Q. The second pair of phase quadrature signals M and N are displaced relative to the first pair of 30°, and the third pair of phase quadrature signals P and Q are displaced relative to the first pair by 60°. With these three pairs of signals, each change of one fringe will produce 12 zero crossings which may be processed in accordance with the circuitry as shown in Figures 4 and 7.

In order to generate the pair of phase quadrature signals M and N, and P and Q, signals A and B must be appropriately weighted before being combined to produce the vectorial sum of signals A and B. For example, to produce a first signal, for example, M, displaced relative to signal A by 30°, signal B would be weighted by tan (30°) before being summed with signal A. In order to produce signal N, signal B may be combined with the negative value of signal A having been passed through another atenuator having a value also equal to tan (30°) as before. Signals P and Q may be similarly produced by passing signals A and B through attenuators having a value substantially equal to tan (60°).

The combination set forth by the present invention and illustrated by the accompanying drawings provides high resolution circuitry for subdividing a passing interference fringe into discrete counts representative of precise phase changes between the counter-propagating laser beams.

## Claims

1. A readout apparatus for a laser angular rate sensor having counter-propagating laser beams (15, 16) which exhibit a change in frequency dependent upon rotation rate and direction, said readout apparatus (25) comprising :
means (12) for optically combining a portion of each of said beams to form an interference fringe pattern (240) ; and
photodetection means (201, 202) responsive to said interference fringe pattern for providing a first pair of first and second analog signals (A, B) substantially in phase quadrature and indicative of said interference fringe pattern impinging on said photodetection means ;
**characterized by**
first means (510, 520) responsive to said first pair of signals (A, B) for providing a second pair of analog signals (X, Y) in phase quadrature and phase displaced by a selected value relative to said first pair of signals ; and
means (302, 304, 310-313, 320 ; 302'...313', 600) responsive to said first and second pair of analog signals for providing an output signal change corresponding to selected zero crossings of said first and second analog signal pairs.

2. Apparatus according to claim 1, **characterized in that** said selected phase displacement is π/4.

3. Apparatus according to claim 1, **characterized in that** said selected phase is displaced by π/4 and said output signal provides an output signal change corresponding to a π/4 phase change between said counter-propagating beams.

4. Apparatus according to claim 1, **characterized by** further means (710, 711 ; 720 to 726) for providing a third pair of analog signals (S, T ; P, Q) in phase quadrature and phase displaced relative to said first pair of signals by π/8, and wherein said readout output signal provides an output signal corresponding to a phase change of π/8 between said counter-propagating laser beams.

5. Apparatus according to claim 1, **characterized in that** said first responsive means include means (510, 520) for vectorially combining the weighted sum of said first pair of signals.

6. Apparatus according to claim 5, **characterized in that** said vectorially combining means are summing (510) and difference (520) forming means.

7. Apparatus according to claim 1, **characterized in that** said second responsive means include signal processing means (310-313, 320 ; 310'-313', 600) to which said first and second pair of signals (A, B ; X, Y) are applied.

8. Apparatus according to claim 7, **characterized in that** said signal processing means comprises :
first, second, third and fourth zero crossing detectors (310-313) responsive to said first pair of signals (A, B), each of said zero crossing detectors providing an output signal change indicative of a zero crossing instant of one of said first and second input signals ; fifth, sixth, seventh and eighth zero crossing detectors (310'-313') responsive to said second pair of signals (X, Y), each of said zero crossing detectors providing an output signal change indicative of a zero crossing instant of one of said third and fourth input signals ; and output means (310, 321 ; 600) for providing an output signal having a signal change for each change of said zero crossing detectors.

9. Apparatus according to one of claims 1 to 8, **characterized by** wave shaping means (302, 304 ; 302', 304') for forming pairs of logic signals (A', B' ; X',

Y') from said pairs of signals (A, B ; X, Y).

**Ansprüche**

1. Auslesevorrichtung für einen Laser-Winkelgeschwindigkeitssensor mit gegenläufigen Laserstrahlen (15, 16), die eine Frequenzänderung in Abhängigkeit von der Drehgeschwindigkeit und Richtung erfahren, wobei die Auslesevorrichtung (25) aufweist :
Eine Einrichtung (12) zur optischen überlagerung eines Teiles eines jeden der Strahlen, um ein Interferenz-Streifenmuster (240) zu bilden ; und
eine Fotodetektorvorrichtung (201, 202), die auf das Interferenz-Streifenmuster anspricht und ein erstes paar von ersten und zweiten analogen Signalen (A, B) bildet, die im wesentlichen in einer Phasenquadraturbeziehung zueinander stehen und das auftreffende Interferenz-Streifenmuster anzeigen ;
**gekennzeichnet durch**
eine erste auf das erste Paar von Signalen (A, B) ansprechende Einrichtung (510, 520) zur Bildung eines zweiten Paares von Analogsignalen (X, Y), die in einer Phasenquadraturbeziehung zueinander stehen und um einen ausgewählten Wert in Bezug auf das erste Paar von Signalen verschoben sind ; und auf das erste und zweite Paar von Analogsignalen ansprechende zweite Einrichtungen (302, 304, 310-313, 320 ; 302'...313', 600) zur Vorgabe einer Ausgangssignaländerung entsprechend ausgewählter Nulldurchgänge der ersten und zweiten AnalogSignalpaare.

2. Vorrichtung nach Anspruch 1, **dadurch gekennzeichnet**, daß die ausgewählte Phasenverschiebung $\pi/4$ beträgt.

3. Vorrichtung nach Anspruch 1, **dadurch gekennzeichnet**, daß die ausgewählte Phase um $\pi/4$ verschoben ist und das Ausgangssignal eine Ausgangssignaländerung entsprechend einer $\pi/4$-Phasenänderung zwischen den gegenläufigen Strahlen liefert.

4. Vorrichtung nach Anspruch 1, **gekennzeichnet durch** weitere Einrichtungen (710, 711 ; 720-726) zur Bildung eines dritten Paares von Analogsignalen (S, T ; P, Q) in einer Phasenquadraturbeziehung zueinander und um $\pi/8$ phasenverschoben gegen das erste Paar von Signalen, wobei das Auslese-Ausgangssignal ein Ausgangssignal bildet entsprechend einer $\pi/8$ Phasenänderung zwischen den gegenläufigen Strahlen.

5. Vorrichtung nach Anspruch 1, **dadurch gekennzeichnet**, daß die erste Einrichtung Mittel (510, 520) zur vektoriellen Kombination der gewichteten Summe des ersten Paares von Signalen umfaßt.

6. Vorrichtung nach Anspruch 5, **dadurch gekennzeichnet**, daß die vektoriellen Kombinationsmittel durch summenbildende (510) und differenzbildende (520) Mittel gebildet sind.

7. Vorrichtung nach Anspruch 1, **dadurch gekennzeichnet**, daß die zweiten Einrichtungen Signalverarbeitungseinrichtungen (310-313, 320 ; 310'-313', 600) umfassen, denen die ersten und zweiten Paare von Signalen (A, B ; Y, X) zugeführt werden.

8. Vorrichtung nach Anspruch 7, **dadurch gekennzeichnet**, daß die Signalverarbeitungseinrichtungen umfassen :
Erste, zweite, dritte und vierte Nulldurchgangsdetektoren (310-313), die auf das erste Paar von Signalen (A, B) ansprechen, wobei jeder Nulldurchgangsdetektor eine Ausgangssignaländerung liefert, die den Nulldurchgangsmoment eines der ersten und zweiten Eingangssignale anzeigt ; fünfte, sechste, siebente und achte Nulldurchgangsdetektoren (310'-313'), die auf das zweite Paar von Signalen (X, Y) ansprechen, wobei jeder Nulldurchgangsdetektor eine Ausgangssignaländerung liefert, die den Nulldurchgangsmoment eines der dritten und vierten Eingangssignale anzeigt ; und eine Ausgangseinrichtung (310, 321 ; 600) zur Bildung eines Ausgangssignales, das eine Signaländerung für jede Änderung der Nulldurchgangsdetektoren aufweist.

9. Vorrichtung nach einem der Ansprüche 1 bis 8, **gekennzeichnet durch** impulsformende Einrichtungen (302, 304 ; 302', 304') zur Bildung von Paaren von Logiksignalen (A', B' ; X', Y') aus den Paaren von Signalen (A, B ; X, Y).

**Revendications**

1. Dispositif de mesure pour un capteur de vitesse angulaire de laser ayant des faisceaux laser se propageant en directions opposées (15, 16) qui présentent un changement de fréquence selon la vitesse de rotation et la direction, ledit dispositif de mesure (25) comprenant :
- des moyens (12) pour combiner optiquement une partie de chacun desdits faisceaux en vue de former un motif de franges d'interférence (240) ; et
- des moyens de photodétection (201, 202) sensibles audit motif de franges d'interférence pour délivrer une première paire de premier et second signaux analogiques (A, B) sensiblement en quadrature de phase et indicatifs dudit motif de franges d'interférence frappant lesdits moyens de photodétection,
caractérisé par,
- des premiers moyens (510, 520) sensibles à la première paire de signaux (A, B) pour délivrer une seconde paire de signaux analogiques (X, Y) en quadrature de phase et décalés en phase d'une valeur choisie relativement à la première paire de signaux ; et
- des moyens (302, 304, 310 à 313, 320 ; 302', ...313', 600) sensibles à la première paire et à la seconde paire de signaux analogiques pour délivrer une modification de signal de sortie correspondant aux passages par zéro choisis des premier et second signaux analogiques.

2. Dispositif selon la revendication 1, caractérisé en ce que ledit décalage de phase choisi est égal à $\pi/4$.

3. Dispositif selon la revendication 1, caractérisé en ce que ladite phase choisie est décalée de $\pi/4$ et en ce que le signal de sortie délivre une modification de signal de sortie correspondant à une modification de phase de $\pi/4$ entre lesdits faisceaux se propageant en directions opposées.

4. Dispositif selon la revendication 1, caractérisé en outre par des moyens (710, 711 ; 720 à 726) pour fournir une troisième paire de signaux analogiques (S, T ; P, Q) en quadrature de phase et décalés en phase relativement à la première paire de signaux de $\pi/8$, et dans lequel ledit signal de sortie de mesure fournit un signal de sortie correspondant à une modification de phase de $\pi/8$ entre les faisceaux laser se propageant en directions opposées.

5. Dispositif selon la revendication 1, caractérisé en ce que les premiers moyens sensibles comprennent des moyens (510, 520) pour combiner vectoriellement la somme pondérée de la première paire de signaux.

6. Dispositif selon la revendication 5, caractérisé en ce que lesdits moyens de combinaison vectoriels sont des moyens de sommation (510) et de différence (520).

7. Dispositif selon la revendication 1, caractérisé en ce que les seconds moyens sensibles comprennent des moyens de traitement de signal (310 à 313, 320 ; 310' à 313', 600) auxquels la première paire et la seconde paire de signaux (A, B ; X, Y) sont appliqués.

8. Dispositif selon la revendication 7, caractérisé en ce que les moyens de traitement de signal comprennent :
- des premier, second, troisième, quatrième détecteurs de passage par zéro (310 à 313) sensibles à la première paire de signaux (A, B), chacun de ces détecteurs de passage par zéro délivrant une modification de signal de sortie indicative de l'instant du passage par zéro de l'un desdits premier et second signaux d'entrée ;
- des cinquième, sixième, septième et huitième détecteurs de passage par zéro (310' à 313') sensibles à la seconde paire de signaux (X, Y), chacun de ces détecteurs de passage par zéro fournissant une modification de signal de sortie indicative d'un instant de passage par zéro de l'un des troisième et quatrième signaux d'entrée ; et
- des moyens formant sortie (310, 321 ; 600) pour délivrer un signal de sortie ayant une modification de signal pour chaque modification desdits détecteurs de passage par zéro.

9. Dispositif selon l'une des revendications 1 à 8, caractérisé par des moyens de conformation d'ondes (302, 304 ; 302', 304') pour former des paires de signaux logiques (A', B' ; X', Y') à partir desdites paires de signaux (A, B ; X, Y).

Fig. 1

Fig. 2

Fig. 4

Fig. 3

Fig. 6

Fig. 9

Fig. 7

Fig. 5

Fig. 8